# EUROPEAN PATENT APPLICATION

(11) **EP 4 741 231 A1**
(43) Date of publication of application: **13.05.2026**
(21) Application number: 24847587.3
(22) Date of filing: 18.03.2024
(51) Int. Cl.: B60R 11/00, B60R 11/04, B60R 13/04, B62D 25/06

(54) **DETECTION-ASSEMBLY MOUNTING STRUCTURE, AND VEHICLE**

(30) Priority: 31.07.2023 CN 202322053784 U
(71) Applicant: Shenzhen Yinwang Intelligent Technologies Co., Ltd., Shenzhen, Guangdong 518110 (CN)
(72) Inventor: MA, Zhenhai, Shenzhen, Guangdong 518129 (CN); HU, Chengwen, Shenzhen, Guangdong 518129 (CN); SHI, Junjie, Shenzhen, Guangdong 518129 (CN); XIE, Fangli, Shenzhen, Guangdong 518129 (CN); ZHANG, Hui, Shenzhen, Guangdong 518129 (CN)
(74) Representative: Körber, Martin Hans
(86) International application number: PCT/CN2024/082298
(87) International publication number: WO 2025/025621

(57) **Abstract**

A detection assembly mounting structure and a vehicle are provided. The detection assembly mounting structure includes a vehicle roof bow (1), a trim panel (2), a detection assembly (3), and a tolerance adjuster (4). The trim panel (2) is connected to the vehicle roof bow (1). The detection assembly (3) is connected to the trim panel (2), and the detection assembly (3) is connected to the vehicle roof bow (1) via the tolerance adjuster (4).

## Description

The present disclosure claims priority to Chinese Patent Application No. 202322053784.1, filed on July 31, 2023 and entitled "DETECTION ASSEMBLY MOUNTING STRUCTURE AND VEHICLE", which is incorporated herein by reference in its entirety.

### TECHNICAL FIELD

The present disclosure relates to the field of vehicle technologies, and in particular, to a detection assembly mounting structure and a vehicle.

### BACKGROUND

A detection assembly (for example, a lidar) on a vehicle roof is one of important functional parts of an autonomous driving system. To ensure function implementation of the detection assembly, mounting and positioning of the detection assembly in a vehicle coordinate system are required to meet high mounting precision and long-term connection reliability. In addition, the detection assembly is also one of appearance parts, and the detection assembly and a trim panel for the detection assembly are further required to meet specific appearance matching precision.

To meet the first requirement, the detection assembly on the vehicle roof needs to be connected to a vehicle roof bow. To meet the second requirement, the detection assembly also needs to be connected to the trim panel. The trim panel is fastened to the vehicle roof bow.

If the detection assembly is connected to both the vehicle roof bow and the trim panel, the detection assembly is over-constrained. However, because there is an error in manufacturing, mounting, and another process of the vehicle roof bow and the trim panel, a relative location relationship between the vehicle roof bow and the trim panel is not fixed, causing the trim panel and the vehicle roof bow to pull the detection assembly when the detection assembly is mounted. As a result, a posture of the detection assembly is poor, and appearance matching precision between the detection assembly and the trim panel is poor.

### SUMMARY

The present disclosure provides a detection assembly mounting structure and a vehicle. A detection assembly of the detection assembly mounting structure is connected to a trim panel, and the detection assembly is connected to a vehicle roof bow via a tolerance adjuster. Technical solutions of the detection assembly mounting structure and the vehicle are described below.

According to a first aspect, the present disclosure provides a detection assembly mounting structure. The detection assembly mounting structure includes a vehicle roof bow, a trim panel, a detection assembly, and a tolerance adjuster. The trim panel is connected to the vehicle roof bow, the detection assembly is connected to the trim panel, and the detection assembly is connected to the vehicle roof bow via the tolerance adjuster.

The detection assembly may be a lidar assembly, and the trim panel may be a lidar trim panel. The tolerance adjuster may also be referred to as an adaptive nut.

According to the technical solution provided in the present disclosure, when the detection assembly is mounted, the detection assembly is first connected to the trim panel, and then the trim panel is connected to the vehicle roof bow. In this case, the detection assembly has been positioned, but is not directly connected to the vehicle roof bow. Due to a manufacturing error and the like, a relative location relationship between the detection assembly and the vehicle roof bow may not be a designed value. For example, a height of mounting space between the detection assembly and the vehicle roof bow may not be a specified value. However, because the tolerance adjuster can adapt to a height change of the mounting space within a specific range, in the present disclosure, the detection assembly is connected to the vehicle roof bow via the tolerance adjuster, to adapt to a deviation between the detection assembly and the vehicle roof bow. In a mounting process, the detection assembly is not pulled, so that a posture of the detection assembly and appearance matching precision between the detection assembly and the trim panel are both in a good state.

In a possible implementation, the tolerance adjuster includes an outer tube and an inner tube. The outer tube is in threaded connection to the inner tube, and the outer tube and the inner tube are located between the detection assembly and the vehicle roof bow. The detection assembly mounting structure further includes a bolt (or a screw). The bolt passes through the vehicle roof bow, the inner tube, and the outer tube, and is in threaded connection to the detection assembly.

The outer tube and the inner tube are located in the mounting space between the detection assembly and the vehicle roof bow, and are configured to support the detection assembly, to prevent the detection assembly from moving toward the vehicle roof bow. In addition, when the inner tube rotates relative to the outer tube, a total length of the inner tube and the outer tube changes, so that the tolerance adjuster can adapt to mounting space of different heights. After the bolt passes through the vehicle roof bow, the inner tube, and the outer tube, and is in threaded connection to the detection assembly, the bolt can prevent the detection assembly from moving away from the vehicle roof bow. In this way, the vehicle roof bow limits the detection assembly.

In a possible implementation, a rotation direction of a thread between the inner tube and the outer tube is opposite to a rotation direction of a thread of the bolt. The bolt is in interference fit with the inner tube.

According to the technical solution provided in the present disclosure, because the bolt is in interference fit with the inner tube, when the bolt is tightened, the bolt drives the inner tube to rotate synchronously. However, because the rotation direction of the thread between the inner tube and the outer tube is opposite to the rotation direction of the thread of the bolt, the total length of the inner tube and the outer tube increases when the bolt is tightened. In this way, the tolerance adjuster can automatically adapt to the mounting space between the detection assembly and the vehicle roof bow.

In addition, if the bolt needs to be further tightened after the inner tube and the outer tube respectively press against the detection assembly and the vehicle roof bow, the inner tube cannot continue to rotate because the inner tube is blocked by the detection assembly or the vehicle roof bow, and the bolt rotates alone. In this case, the bolt needs to overcome friction between the bolt and the inner tube during rotation, that is, the bolt slides axially and rotates circumferentially relative to the inner tube.

In a possible implementation, the outer tube has a hook, and the hook is clamped to the vehicle roof bow or the detection assembly.

According to the technical solution provided in the present disclosure, the outer tube is provided with the hook, so that the hook can be used to preliminarily fasten the tolerance adjuster, to facilitate mounting of the tolerance adjuster. In addition, existence of the hook can also prevent the outer tube from rotating with the inner tube.

In a possible implementation, the detection assembly includes a detector. The detector is connected to the trim panel, and the detector is connected to the vehicle roof bow via the tolerance adjuster. The detector has a threaded hole, and a bolt of the tolerance adjuster extends into the threaded hole.

In a possible implementation, the tolerance adjuster includes the outer tube and the inner tube. The outer tube is in threaded connection to the inner tube, and the outer tube and the inner tube are located between the detector and the vehicle roof bow. The outer tube has a hook, and the hook is clamped to the vehicle roof bow. The detection assembly mounting structure further includes the bolt. The bolt passes through the vehicle roof bow, the outer tube, and the inner tube, and is in threaded connection to the detector. The vehicle roof bow has a hook hole through which the hook passes. Compared with the detector, the vehicle roof bow is more convenient for disposing the hook hole.

In a possible implementation, the detection assembly includes a detector and a bracket, and the detector is fastened to the bracket. The detector is connected to the trim panel, and the bracket is connected to the vehicle roof bow via the tolerance adjuster.

In a possible implementation, the detection assembly includes a detector and a bracket, and the detector is fastened to the bracket. The bracket is connected to the trim panel, and the bracket is connected to the vehicle roof bow via the tolerance adjuster.

In a possible implementation, the tolerance adjuster includes an outer tube and an inner tube. The outer tube is in threaded connection to the inner tube, and the outer tube and the inner tube are located between the bracket and the vehicle roof bow. The outer tube has a hook, and the hook is clamped to the bracket. The detection assembly mounting structure further includes a bolt. The bolt passes through the vehicle roof bow, the inner tube, and the outer tube, and is in threaded connection to the bracket. The bracket has a hook hole through which the hook passes. Compared with the vehicle roof bow, the bracket is more convenient for disposing the hook hole.

In a possible implementation, a projection welding nut is welded to the bracket, and the bolt of the tolerance adjuster is in threaded connection to the projection welding nut.

In a possible implementation, there is a gap between the bracket and a bottom wall of the detector, and the hook passes through the bracket and extends into the gap.

In a possible implementation, a plurality of bosses are provided on the bottom wall of the detector, and the plurality of bosses are fastened to the bracket, to form the gap that is between the bracket and the bottom wall of the detector and into which the hook extends.

In a possible implementation, there are four bosses, and the four bosses are located at four corners of the bottom wall of the detector.

In a possible implementation, a plurality of mounting feet are provided on a side wall of the detector. The bracket includes a first support plate, a connection plate, and a second support plate that are sequentially connected. The first support plate is fastened to the plurality of mounting feet. The connection plate is opposite to the side wall of the detector. The second support plate is opposite to the bottom wall of the detector, and the gap into which the hook extends is formed between the second support plate and the bottom wall of the detector.

In a possible implementation, there are a plurality of tolerance adjusters, and the plurality of tolerance adjusters include at least three tolerance adjusters distributed in a triangular shape.

According to the technical solution provided in the present disclosure, the detection assembly mounting structure includes the at least three tolerance adjusters distributed in the triangular shape, and according to a principle of determining one plane based on three points, the detection assembly can be more stable.

In a possible implementation, there are three tolerance adjusters that are distributed in a triangular shape.

According to a second aspect, the present disclosure provides a vehicle. The vehicle includes the detection assembly mounting structure according to any one of the possible implementations of the first aspect.

The vehicle may be a car, a sport utility vehicle (sport utility vehicle, SUV), a multi-purpose vehicle (multi-purpose vehicle, MPV), or the like. The vehicle may implement an autonomous driving function or another detection function by using the detection assembly in the detection assembly mounting structure.

### BRIEF DESCRIPTION OF DRAWINGS

FIG. 1 is a diagram of a detection assembly mounting structure in a related technology;
FIG. 2 is a diagram of a detection assembly mounting structure in a related technology;
FIG. 3 is a diagram of a detection assembly mounting structure according to an embodiment of the present disclosure;
FIG. 4 is a diagram of a tolerance adjuster according to an embodiment of the present disclosure;
FIG. 5 is a sectional view of a tolerance adjuster according to an embodiment of the present disclosure;
FIG. 6 is a diagram of a principle of adjusting a tolerance by a tolerance adjuster according to an embodiment of the present disclosure;
FIG. 7 is a diagram of a tolerance adjuster according to an embodiment of the present disclosure;
FIG. 8 is an outline diagram of a detection assembly mounting structure according to an embodiment of the present disclosure;
FIG. 9 is an exploded view of a detection assembly mounting structure according to an embodiment of the present disclosure;
FIG. 10 is a partial diagram of a detection assembly mounting structure according to an embodiment of the present disclosure;
FIG. 11 is a diagram of a detection assembly mounting structure according to an embodiment of the present disclosure;
FIG. 12 is an exploded view of a detection assembly mounting structure according to an embodiment of the present disclosure;
FIG. 13 is a partial diagram of a detection assembly mounting structure according to an embodiment of the present disclosure;
FIG. 14 is a diagram of a detection assembly according to an embodiment of the present disclosure;
FIG. 15 is a sectional view of a detection assembly mounting structure according to an embodiment of the present disclosure;
FIG. 16 is a diagram of a detection assembly mounting structure according to an embodiment of the present disclosure;
FIG. 17 is an exploded view of a detection assembly mounting structure according to an embodiment of the present disclosure;
FIG. 18 is a partial diagram of a detection assembly mounting structure according to an embodiment of the present disclosure;
FIG. 19 is a diagram of a bracket according to an embodiment of the present disclosure;
FIG. 20 is a diagram of a detection assembly according to an embodiment of the present disclosure; and
FIG. 21 is a sectional view of a detection assembly mounting structure according to an embodiment of the present disclosure.

### Reference numerals

1: vehicle roof bow, 100: first hook hole;
2: trim panel;
3: detection assembly, 30: gap, 31: detector, 310: window, 311: bottom wall, 3111: boss, 312: side wall, 3121: mounting foot, 32: bracket, 32a: second hook hole, 32b: nut accommodation portion, 32c: first mounting hole, 32d: second mounting hole, 32e: third mounting hole, 321: first support plate, 3211: first support sub-plate, 3212: second support sub-plate, 322: connection plate, 323: second support plate;
4: tolerance adjuster, 41: outer tube, 411: hook, 42: inner tube, 421: inner tube body, 422: bushing, 43: sealing ring;
5: bolt, 6: washer, 7: nut, 8: first fastener, 9: second fastener, 10: third fastener, 11: fourth fastener.

### DESCRIPTION OF EMBODIMENTS

With development of an autonomous driving technology of a vehicle, a detection assembly (for example, a lidar assembly) on a vehicle roof is increasingly used. As an important functional part in an autonomous driving system, to ensure function implementation of the detection assembly, mounting and positioning of the detection assembly in a vehicle coordinate system are required to meet high mounting precision (an angular deviation between the detection assembly and each of X, Y, and Z axes of the vehicle usually cannot exceed a specific threshold, for example, 0.5°) and long-term connection reliability (for example, stability of a location of the detection assembly needs to be ensured in different road conditions). In addition, the detection assembly is also one of appearance parts. A window of the detection assembly and a trim panel need to meet specific appearance matching precision requirements, that is, meet requirements for a gap and a surface difference between the window of the detection assembly and the trim panel. For example, the gap needs to meet 1.0±0.5 mm.

To meet the first requirement, the detection assembly on the vehicle roof usually needs to be connected to a vehicle roof bow. To meet the second requirement, the detection assembly also needs to be connected to the trim panel. The trim panel is fastened to the vehicle roof bow.

Because the detection assembly is connected to both the vehicle roof bow and the trim panel, the detection assembly is actually over-constrained. However, because there is an error in manufacturing, mounting, and another process of the vehicle roof bow and the trim panel, a relative location relationship between the vehicle roof bow and the trim panel may not be a designed location, causing the trim panel and the vehicle roof bow to pull the detection assembly when the detection assembly is mounted. As a result, a posture of the detection assembly is poor, and appearance matching precision between the detection assembly and the trim panel is poor.

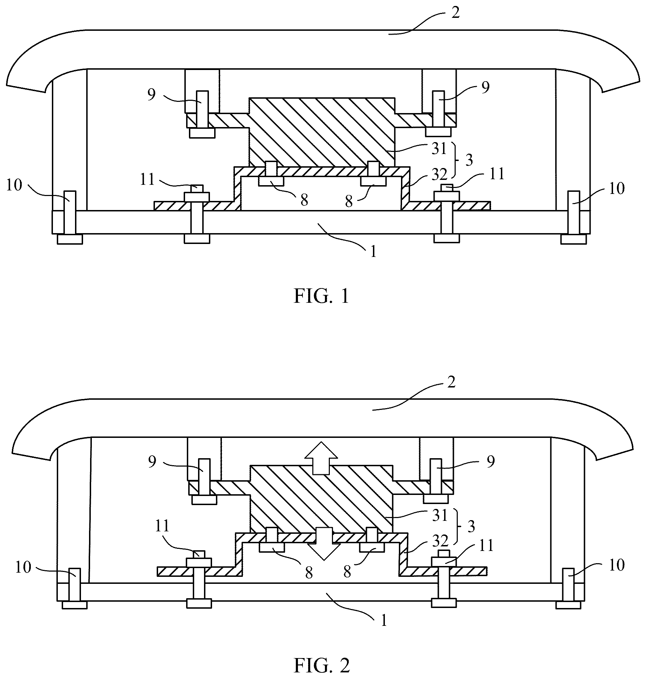

For example, as shown in FIG. 1 and FIG. 2, when the detection assembly is mounted, a detection assembly 3 is first connected to a trim panel 2 via second fasteners 9. Then, the trim panel 2 is connected to a vehicle roof bow 1 via third fasteners 10. In this case, the detection assembly 3 has been positioned, but is not directly connected to the vehicle roof bow 1. As shown in FIG. 1, in an ideal state, a location of the detection assembly 3 is a designed location. In this case, in a process in which the detection assembly 3 is connected to the vehicle roof bow 1 via fourth fasteners 11, the location and a posture of the detection assembly 3 remain unchanged.

However, as shown in FIG. 2, during actual application, the location of the detection assembly 3 may not be the designed location. In this case, in the process in which the detection assembly 3 is connected to the vehicle roof bow 1 via the fourth fasteners 11, the vehicle roof bow 1 and the trim panel 2 pull the detection assembly 3 (as shown by arrows in FIG. 2), resulting in a poor posture of the detection assembly 3 and poor appearance matching precision between the detection assembly 3 and the trim panel 2.

To resolve the foregoing technical problems, in a related technology, the detection assembly 3 is connected to only the trim panel 2, and is not connected to the vehicle roof bow 1. However, because the trim panel 2 is usually made of a plastic material, the trim panel 2 may deform due to factors such as a temperature and sunlight exposure in a long service life of the vehicle. As a result, the posture and the location of the detection assembly 3 change, affecting a detection function of the detection assembly 3, and causing poor long-term reliability of the detection assembly 3.

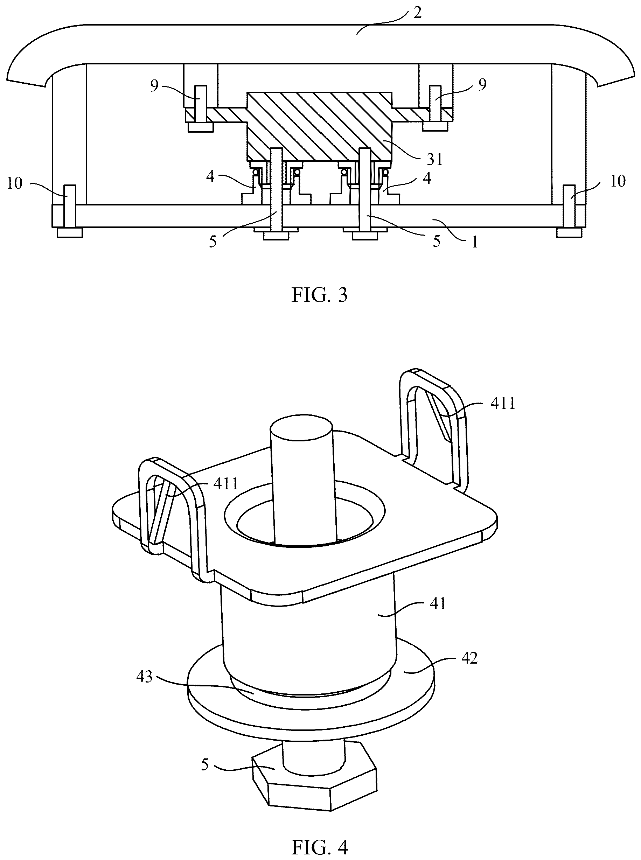

In view of the foregoing technical problems, embodiments of the present disclosure provide a detection assembly mounting structure. As shown in FIG. 3, FIG. 11, or FIG. 16, the detection assembly mounting structure includes a vehicle roof bow 1, a trim panel 2, a detection assembly 3, and a tolerance adjuster 4. The trim panel 2 is connected to the vehicle roof bow 1. The detection assembly 3 is connected to the trim panel 2, and the detection assembly 3 is connected to the vehicle roof bow 1 via the tolerance adjuster 4.

The detection assembly 3 may be a lidar assembly, and the trim panel 2 may be a lidar trim panel. The detection assembly 3 includes at least a detector 31, and may further include a bracket 32 configured to assist in mounting the detector 31. The detector 31 may be a lidar. The tolerance adjuster 4 may also be referred to as an adaptive nut.

According to the technical solution provided in embodiments of the present disclosure, when the detection assembly 3 is mounted, the detection assembly 3 is first connected to the trim panel 2, and then the trim panel 2 is connected to the vehicle roof bow 1. In this case, the detection assembly 3 has been positioned, but is not directly connected to the vehicle roof bow 1. Due to a manufacturing error and the like, a relative location relationship between the detection assembly 3 and the vehicle roof bow 1 may not be a designed value. Specifically, a height of mounting space between the detection assembly 3 and the vehicle roof bow 1 may not be a specified value. However, because the tolerance adjuster 4 can adapt to a height change of the mounting space within a specific range, the detection assembly 3 is connected to the vehicle roof bow 1 by disposing the tolerance adjuster 4, to adapt to a deviation between the detection assembly 3 and the vehicle roof bow 1. In a mounting process, the detection assembly 3 is not pulled, so that a posture of the detection assembly 3 and appearance matching precision between the detection assembly 3 and the trim panel 2 are both in a good state.

The following illustrates the tolerance adjuster 4 provided in embodiments of the present disclosure. In some examples, as shown in FIG. 4 to FIG. 7, the tolerance adjuster 4 includes an outer tube 41 and an inner tube 42. The outer tube 41 is in threaded connection to the inner tube 42, and the outer tube 41 and the inner tube 42 are located between the detection assembly 3 and the vehicle roof bow 1. The detection assembly mounting structure further includes a bolt 5. The bolt 5 passes through the vehicle roof bow 1, the inner tube 42, and the outer tube 41, and is connected to the detection assembly 3.

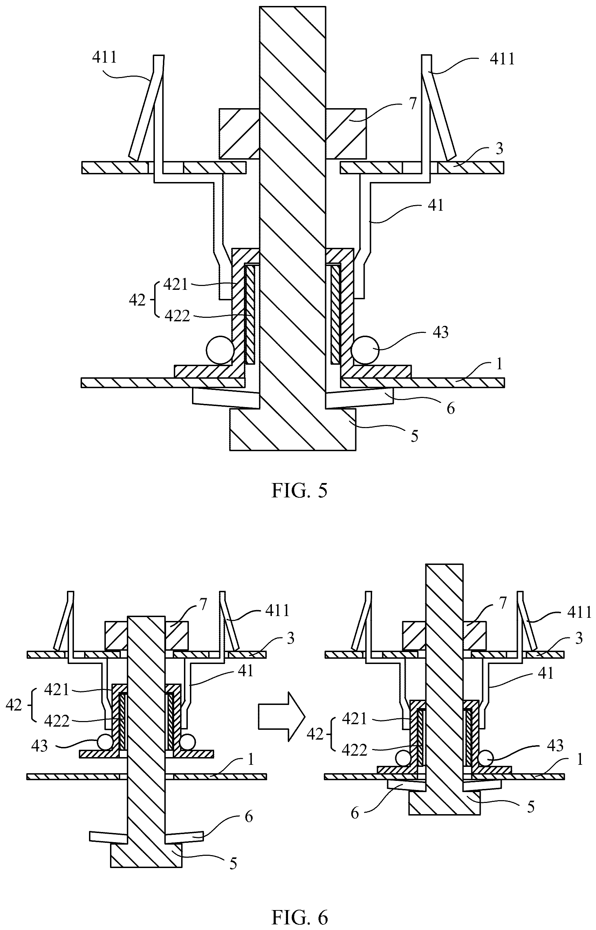

As shown in FIG. 5 and FIG. 6, the outer tube 41 and the inner tube 42 are located in mounting space between the detection assembly 3 and the vehicle roof bow 1, and are configured to support the detection assembly 3, to prevent the detection assembly 3 from moving toward the vehicle roof bow 1. In addition, when the inner tube 42 rotates relative to the outer tube 41, a total length of the inner tube 42 and the outer tube 41 changes, so that the tolerance adjuster 4 can adapt to mounting space of different heights. After the bolt 5 passes through the vehicle roof bow 1, the inner tube 42, and the outer tube 41, and is in threaded connection to the detection assembly 3, the bolt 5 can prevent the detection assembly 3 from moving away from the vehicle roof bow 1. In this way, the vehicle roof bow 1 limits the detection assembly 3.

In some examples, a rotation direction of a thread between the inner tube 42 and the outer tube 41 is opposite to a rotation direction of a thread of the bolt 5. The bolt 5 is in interference fit with the inner tube 42.

According to the technical solution provided in embodiments of the present disclosure, because the bolt 5 is in interference fit with the inner tube 42, as shown in FIG. 6, when the bolt 5 is tightened, the bolt 5 drives the inner tube 42 to rotate synchronously. However, because the rotation direction of the thread between the inner tube 42 and the outer tube 41 is opposite to the rotation direction of the thread of the bolt 5, the total length of the inner tube 42 and the outer tube 41 increases when the bolt 5 is tightened. In this way, the tolerance adjuster 4 can automatically adapt to the mounting space between the vehicle roof bow 1 and the detection assembly 3. This disposing manner is particularly applicable to a mounting scenario of the detection assembly 3 provided in embodiments of the present disclosure. In this scenario, operation space is limited, and the foregoing disposing manner can be used to reduce requirements on the operation space.

In addition, if the bolt 5 needs to be further tightened after the inner tube 42 and the outer tube 41 respectively press against the vehicle roof bow 1 and the detection assembly 3, the inner tube 42 cannot continue to rotate because the inner tube 42 is blocked by the detection assembly 3, and the bolt 5 rotates alone. In this case, the bolt 5 needs to overcome friction between the bolt 5 and the inner tube 42 during rotation, that is, the bolt 5 performs axial movement and circumferential movement relative to the inner tube 42.

It should be additionally noted that the tolerance adjuster 4 in FIG. 5 and FIG. 6 may also be used in reverse. To be specific, the outer tube 41 presses against the vehicle roof bow 1, and the inner tube 42 presses against the detection assembly 3.

In some examples, as shown in FIG. 5, the inner tube 42 includes an inner tube body 421 and a bushing 422. The bushing 422 is located inside the inner tube body 421, and the bushing 422 and the inner tube body 421 are fastened to each other in a circumferential direction (for example, may be in interference fit with each other). The bushing 422 is in interference fit with the bolt 5. When the bolt 5 rotates, the bushing 422 and the inner tube body 421 rotate together. The bushing 422 may be a plastic bushing.

In some examples, a rotation direction of a thread between the inner tube 42 and the outer tube 41 may alternatively be set to be the same as a rotation direction of a thread of the bolt 5. In this case, when the bolt 5 is rotated, a length between the inner tube 42 and the outer tube 41 cannot automatically extend, that is, a gap cannot be automatically adapted. In this case, the total length of the inner tube 42 and the outer tube 41 needs to be adjusted to be at a proper location, to support the detection assembly 3. Then, the bolt 5 is rotated. In addition, the bolt 5 is not in interference fit with the inner tube 42 (for example, the bolt 5 may be in clearance fit with the inner tube 42), so that the total length of the inner tube 42 and the outer tube 41 does not change when the bolt 5 is rotated.

In some examples, as shown in FIG. 4 to FIG. 6, the outer tube 41 has a hook 411, and the hook 411 is clamped to the vehicle roof bow 1 or the detection assembly 3. The hook 411 may be an elastic hook.

According to the technical solution provided in embodiments of the present disclosure, the outer tube 41 is provided with the hook 411, so that the hook 411 can be used to preliminarily fasten the tolerance adjuster 4, to facilitate mounting of the tolerance adjuster 4. In addition, existence of the hook 411 can also prevent the outer tube 41 from rotating with the inner tube 42.

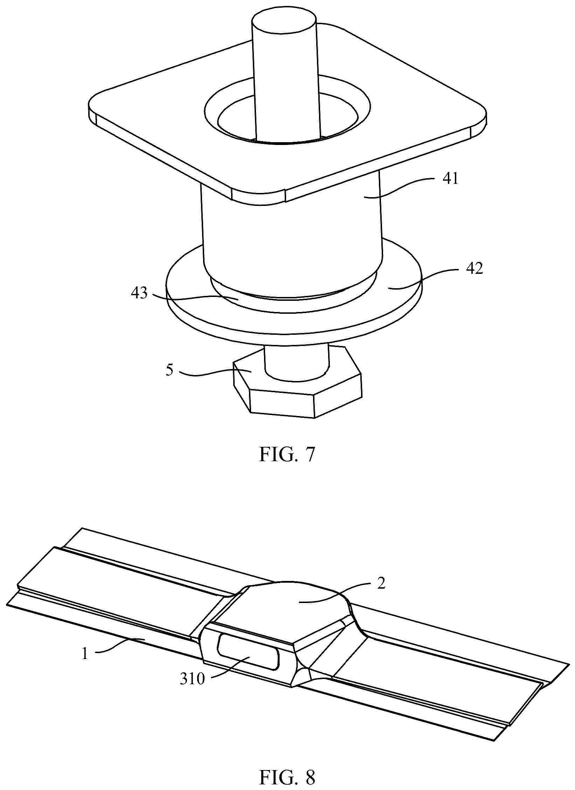

In some other examples, as shown in FIG. 7, the outer tube 41 may alternatively not have a hook 411. When the tolerance adjuster 4 shown in FIG. 7 is used, the outer tube 41 needs to be preliminarily fastened in another manner, to prevent the outer tube 41 from rotating with the inner tube 42.

In some examples, as shown in FIG. 4 to FIG. 7, the tolerance adjuster 4 further includes a sealing ring 43, and the sealing ring 43 is sleeved around the inner tube 42.

In some examples, as shown in FIG. 4 to FIG. 7, the tolerance adjuster 4 further includes a washer 6, and the washer 6 is located between the vehicle roof bow 1 and a head of the bolt 5.

The following illustrates three possible implementations of the detection assembly mounting structure provided in embodiments of the present disclosure.
(1) In some examples, as shown in FIG. 3 and FIG. 8 to FIG. 10, the detection assembly 3 includes the detector 31. The detector 31 is connected to the trim panel 2, and the detector 31 is connected to the vehicle roof bow 1 via the tolerance adjuster 4.

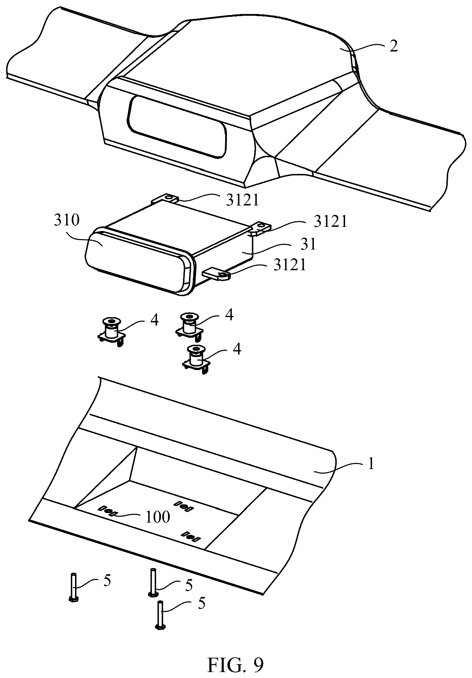

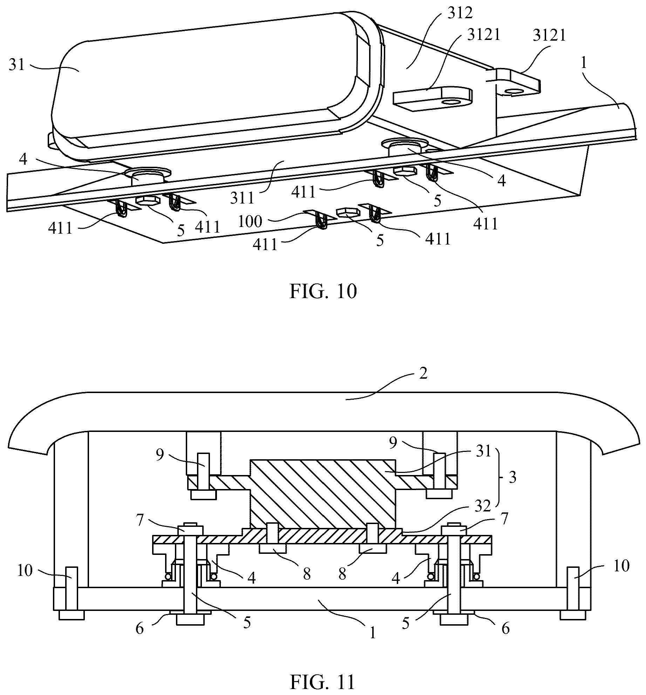

In some examples, as shown in FIG. 9 and FIG. 10, when the tolerance adjuster 4 has the hook 411, a hook hole needs to be provided on the detector 31 or the vehicle roof bow 1. The hook hole is used for the hook 411 to pass through. For example, as shown in FIG. 9 and FIG. 10, because it is easier to dispose the hook hole on the vehicle roof bow 1 than on the detector 31, the hook hole may be disposed on the vehicle roof bow 1. The hook hole on the vehicle roof bow 1 may be referred to as a first hook hole 100. In addition, as shown in FIG. 9 and FIG. 10, a through hole through which the bolt 5 passes should be further provided on the vehicle roof bow 1, and there are first hook holes 100 on two sides of each through hole.

The following illustrates a mounting process and an implementation of the detector 31.

In a first step, as shown in FIG. 3, the detector 31 and the trim panel 2 are positioned by using a tool or self-positioned by using a part, and then are connected to each other via second fasteners 9. For example, as shown in FIG. 9 and FIG. 10, the detector 31 has a plurality of mounting feet 3121. In this case, the second fasteners 9 pass through through holes on the plurality of mounting feet 3121, and are fastened to the trim panel 2. There may be four mounting feet 3121.

In a second step, the tolerance adjuster 4 is connected to the vehicle roof bow 1. For example, as shown in FIG. 9 and FIG. 10, the hook 411 of the tolerance adjuster 4 extends into the first hook hole 100 of the vehicle roof bow 1, to preliminarily fasten the tolerance adjuster 4.

In a third step, as shown in FIG. 3, the trim panel 2 and the vehicle roof bow 1 are positioned by using a tool or self-positioned by using a part, and then connected to each other via third fasteners 10. In this case, relative locations of the detector 31 and the vehicle roof bow 1 can be determined. The trim panel 2 and the vehicle roof bow 1 may be connected to each other on a final assembly workshop line. There may be a plurality of evenly distributed connection points (not shown in the figure) between the trim panel 2 and the vehicle roof bow 1.

In a fourth step, as shown in FIG. 9 and FIG. 10, the detector 31 is connected to the vehicle roof bow 1 via the tolerance adjuster 4, where a height deviation between the detector 31 and the vehicle roof bow 1 can be automatically absorbed when the tolerance adjuster 4 is tightened. For example, the bolt 5 sequentially passes through the vehicle roof bow 1, the outer tube 41, and the inner tube 42, and is tightened in a threaded hole disposed at the bottom of the detector 31. During rotation of the bolt 5, lengths of the outer tube 41 and the inner tube 42 automatically extend, and adapt to mounting space between the detector 31 and the vehicle roof bow 1.

(2) In some examples, as shown in FIG. 8 and FIG. 11 to FIG. 15, the detection assembly 3 includes the detector 31 and the bracket 32. The detector 31 is fastened to the bracket 32. The detector 31 is connected to the trim panel 2, and the bracket 32 is connected to the vehicle roof bow 1 via the tolerance adjuster 4.

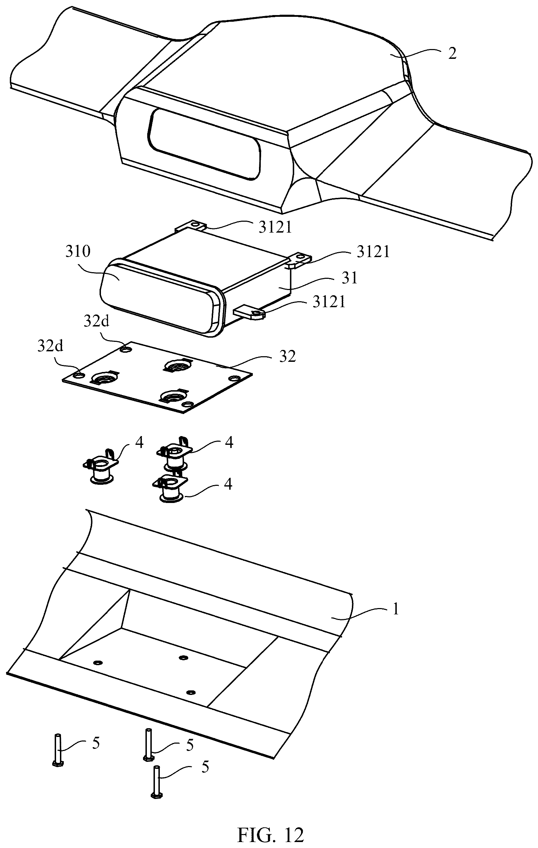

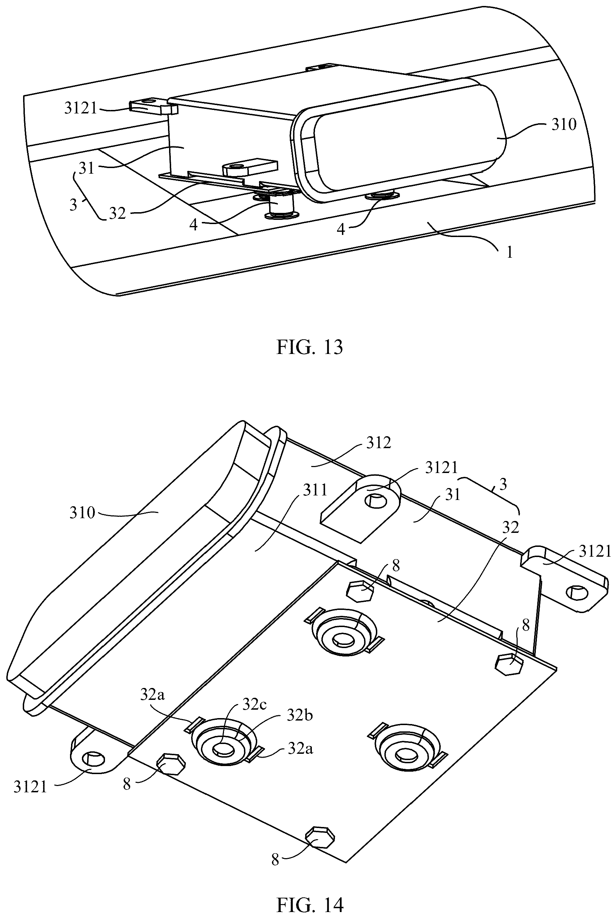

In some examples, as shown in FIG. 12 to FIG. 15, when the tolerance adjuster 4 has the hook 411, a hook hole needs to be provided on the bracket 32 or the vehicle roof bow 1. The hook hole is used for the hook 411 to pass through. For example, as shown in FIG. 14, because it is easier to dispose the hook hole on the bracket 32 than on the vehicle roof bow 1, the hook hole may be disposed on the bracket 32. The hook hole on the bracket 32 may be referred to as a second hook hole 32a.

In some examples, as shown in FIG. 14, to facilitate connection between the bracket 32 and the bolt 5, a nut accommodation portion 32b is further provided on the bracket 32, and a nut 7 may be provided in the nut accommodation portion 32b. The nut 7 may be a projection welding nut. A first mounting hole 32c through which the bolt 5 passes is provided at a central location of the nut accommodation portion 32b.

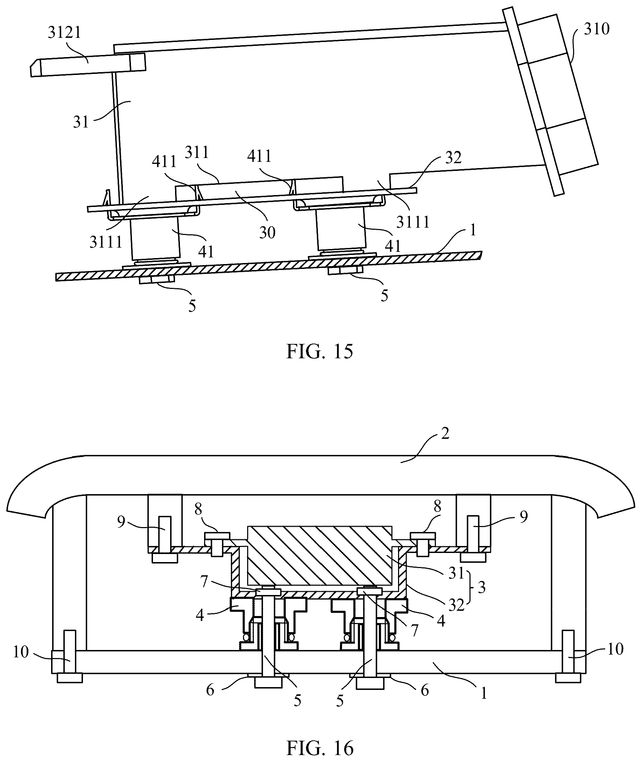

To avoid interference between a bottom wall 311 of the detector 31 and the hook 411, in some examples, as shown in FIG. 15, there is a gap 30 between the bracket 32 and the bottom wall 311 of the detector 31. The hook 411 passes through the bracket 32 and extends into the gap 30.

In some examples, as shown in FIG. 15, a plurality of bosses 3111 is provided on the bottom wall 311 of the detector 31, and the plurality of bosses 3111 are fastened to the bracket 32. In this way, the gap 30 is formed between the bracket 32 and the bottom wall 311 of the detector 31.

Certainly, in some other examples, as shown in FIG. 11, parts through which the hook 411 passes, namely, locations at which the second hook hole 32a and the nut accommodation portion 32b are disposed on the bracket 32, are located on an outer side of the detector 31, and are not opposite to the detector 31. In this case, because the bottom wall 311 of the detector 31 does not block the hook 411, there may be no gap 30 between the bottom wall 311 of the detector 31 and the bracket 32.

The following illustrates a mounting process and an implementation of the detector 31.

In a first step, as shown in FIG. 14, the detector 31 and the bracket 32 are positioned by using a tool or self-positioned by using a part, and then are connected to each other via first fasteners 8. For example, as shown in FIG. 12 and FIG. 14, the bracket 32 has a plurality of second mounting holes 32d, and the first fasteners 8 pass through the second mounting holes 32d, and are tightened in threaded holes at the bottom of the detector 31. The threaded holes may be located on the boss 3111 at the bottom of the detector 31, and there may be four second mounting holes 32d.

In a second step, as shown in FIG. 11, the detector 31 and the trim panel 2 are positioned by using a tool or self-positioned by using a part, and then are connected to each other via second fasteners 9. For example, as shown in FIG. 12 to FIG. 15, the detector 31 has a plurality of mounting feet 3121. In this case, the second fasteners 9 pass through through holes on the plurality of mounting feet 3121, and are fastened to the trim panel 2. There may be four mounting feet 3121.

In a third step, as shown in FIG. 15, the tolerance adjuster 4 is connected to the bracket 32. For example, the hook 411 of the tolerance adjuster 4 extends into the second hook hole 32a of the bracket 32, to preliminarily fasten the tolerance adjuster 4.

In a fourth step, as shown in FIG. 11, the trim panel 2 and the vehicle roof bow 1 are positioned by using a tool or self-positioned by using a part, and then connected to each other via third fasteners 10. In this case, relative locations of the detector 31 and the vehicle roof bow 1 can be determined. The trim panel 2 and the vehicle roof bow 1 may be connected on a final assembly workshop line, and there may be eight connection points for fastening on the trim panel 2 and the vehicle roof bow 1.

In a fifth step, as shown in FIG. 15, the detector bracket 32 is connected to the vehicle roof bow 1 via the tolerance adjuster 4, where a height deviation between the bracket 32 and the vehicle roof bow 1 caused by a manufacturing tolerance can be automatically absorbed when the tolerance adjuster 4 is tightened.

For example, as shown in FIG. 15, the bolt 5 sequentially passes through the vehicle roof bow 1, the inner tube 42, and the outer tube 41, and is tightened in the nut 7 disposed on the bracket 32. In addition, during rotation of the bolt 5, lengths of the outer tube 41 and the inner tube 42 automatically extend, and adapt to a gap or mounting space between the bracket 32 and the vehicle roof bow 1.

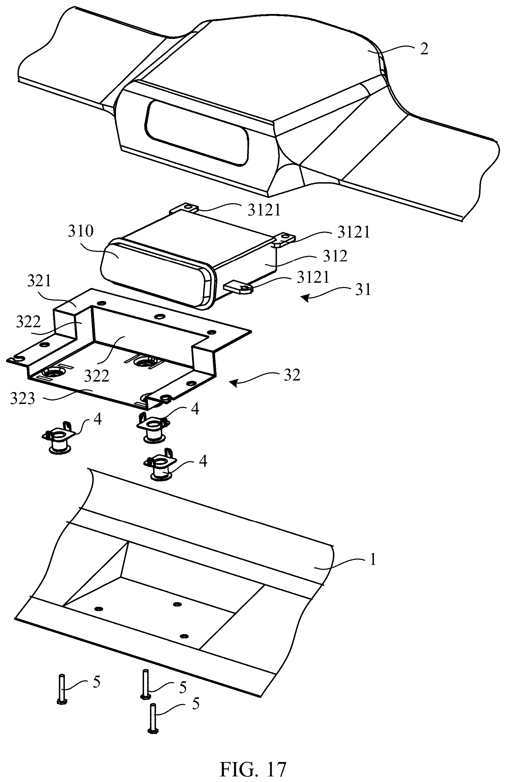

(3) In some examples, as shown in FIG. 8 and FIG. 16 to FIG. 21, the detection assembly 3 includes the detector 31 and the bracket 32. The detector 31 is fastened to the bracket 32. The bracket 32 is connected to the trim panel 2, and the bracket 32 is connected to the vehicle roof bow 1 via the tolerance adjuster 4.

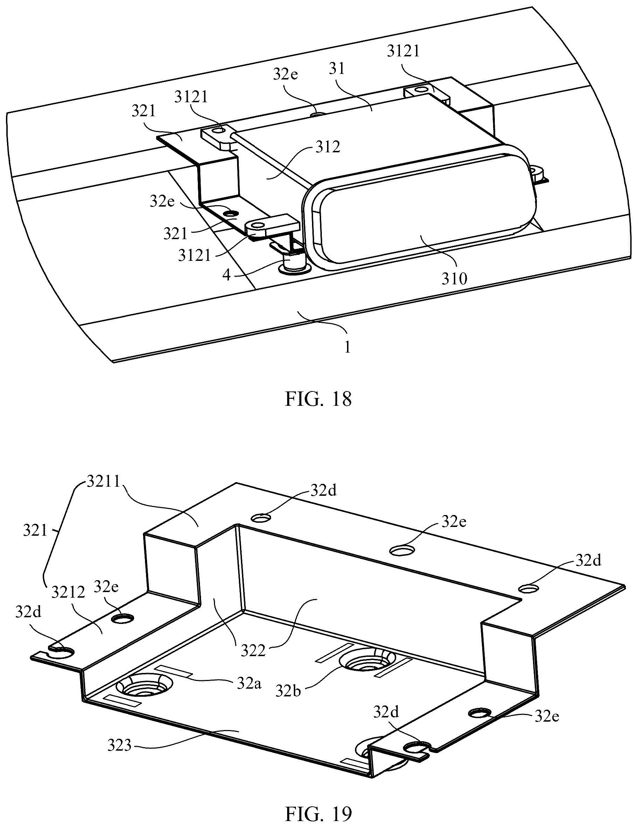

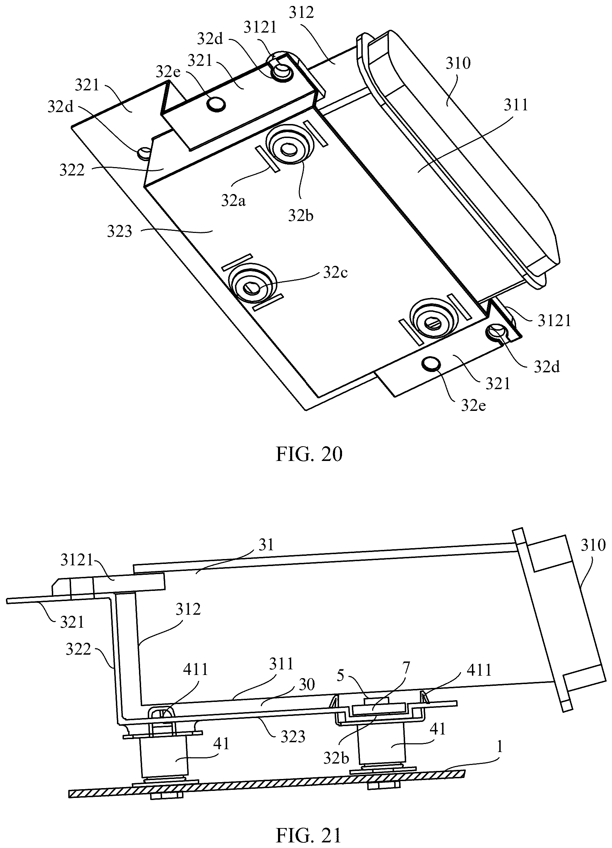

In some examples, as shown in FIG. 19 and FIG. 20, when the tolerance adjuster 4 has the hook 411, a hook hole needs to be provided on the bracket 32 or the vehicle roof bow 1. The hook hole is used for the hook 411 to pass through. For example, as shown in FIG. 19 and FIG. 20, because it is easier to dispose the hook hole on the bracket 32 than on the vehicle roof bow 1, the hook hole may be disposed on the bracket 32. The hook hole on the bracket 32 may be referred to as a second hook hole 32a.

In some examples, as shown in FIG. 19 to FIG. 21, to facilitate connection between the bracket 32 and the bolt 5, a nut accommodation portion 32b is provided on the bracket 32, and a nut 7 may be provided in the nut accommodation portion 32b. The nut 7 may be a projection welding nut. A first mounting hole 32c through which the bolt 5 passes is provided at a central location of the nut accommodation portion 32b.

To avoid interference between a bottom wall 311 of the detector 31 and the hook 411, in some examples, as shown in FIG. 21, there is a gap 30 between the bracket 32 and the bottom wall 311 of the detector 31. The hook 411 passes through the bracket 32 and extends into the gap 30.

In some examples, as shown in FIG. 19 to FIG. 21, the bracket 32 includes a first support plate 321, a connection plate 322, and a second support plate 323 that are sequentially connected. The first support plate 321 is fastened to the plurality of mounting feet 3121 of the detector 31. The connection plate 322 is opposite to a side wall 312 of the detector 31. The second support plate 323 is opposite to the bottom wall 311 of the detector 31, and the gap 30 is formed between the second support plate 323 and the bottom wall 311 of the detector 31.

In some examples, as shown in FIG. 19, the first support plate 321 and the second support plate 323 are parallel to each other, and are both perpendicular to the connection plate 322.

Certainly, in some other examples, parts through which the hook 411 passes, namely, locations at which the second hook hole 32a and the nut accommodation portion 32b are disposed on the bracket 32 may be located on an outer side of the detector 31, and are not opposite to the detector 31. In this case, because the bottom wall 311 of the detector 31 does not block the hook 411, there may be no gap 30 between the bottom wall 311 of the detector 31 and the bracket 32.

The following illustrates a mounting process and an implementation of the detector 31.

In a first step, as shown in FIG. 16, the detector 31 and the bracket 32 are positioned by using a tool or self-positioned by using a part, and then are connected to each other via first fasteners 8. For example, as shown in FIG. 18 and FIG. 19, the bracket 32 (the first support plate 321) has a plurality of (for example, four) second mounting holes 32d, and the first fasteners 8 pass through the second mounting holes 32d and the mounting feet 3121 of the detector 31.

In some examples, as shown in FIG. 18 and FIG. 19, the first support plate 321 includes a first sub-support plate 3211 and a second sub-support plate 3212. The first sub-support plate 3211 extends towards a rear side of the detector 31. There are two second sub-support plates 3212 that are respectively located on two sides of the detector 31 and that extend towards an outer side of the detector 31. The first sub-support plate 3211 may be provided with two second mounting holes 32d, and the two second mounting holes 32d are configured to connect to two mounting feet 3121 protruding from the rear side of the detector 31. Each second sub-support plate 3212 has one second mounting hole 32d, and the second mounting hole 32d is configured to connect to a mounting foot 3121 protruding from a left side or a right side of the detector 31.

In a second step, as shown in FIG. 16, the bracket 32 and the trim panel 2 are positioned by using a tool or self-positioned by using a part, and then are connected to each other via second fasteners 9.

For example, as shown in FIG. 18 to FIG. 20, the bracket 32 (the first support plate 321) is further provided with a plurality of third mounting holes 32e, and the second fasteners 9 pass through the plurality of third mounting holes 32e, and are fastened to the trim panel 2.

For example, as shown in FIG. 18 and FIG. 19, the first sub-support plate 3211 is provided with one third mounting hole 32e, and each second sub-support plate 3212 is provided with one third mounting hole 32e.

In a third step, as shown in FIG. 21, the tolerance adjuster 4 is connected to the bracket 32. For example, as shown in FIG. 20 and FIG. 21, the hook 411 of the tolerance adjuster 4 extends into the second hook hole 32a of the bracket 32, to preliminarily fasten the tolerance adjuster 4.

The first step to the third step may be performed on a sub-assembly line in a final assembly workshop, to reduce operation steps on a final assembly workshop line.

In a fourth step, as shown in FIG. 16, the trim panel 2 and the vehicle roof bow 1 are positioned by using a tool or self-positioned by using a part, and then connected to each other via third fasteners 10. In this case, relative locations of the detector 31 and the vehicle roof bow 1 can be determined. The trim panel 2 and the vehicle roof bow 1 may be connected on a final assembly workshop line, and there may be eight connection points for fastening on the trim panel 2 and the vehicle roof bow 1.

In a fifth step, as shown in FIG. 21, the bracket 32 is connected to the vehicle roof bow 1 via the tolerance adjuster 4, where a height deviation between the bracket 32 and the vehicle roof bow 1 can be automatically absorbed when the tolerance adjuster 4 is tightened.

For example, as shown in FIG. 21, the bolt 5 sequentially passes through the vehicle roof bow 1, the inner tube 42, and the outer tube 41, and is tightened in the nut 7 disposed on the bracket 32. During rotation of the bolt 5, lengths of the outer tube 41 and the inner tube 42 automatically extend, and adapt to mounting space between the bracket 32 and the vehicle roof bow 1.

A quantity of tolerance adjusters 4 is not limited in embodiments of the present disclosure. In some examples, as shown in FIG. 9, FIG. 10, FIG. 12, and FIG. 17, there are a plurality of tolerance adjusters 4. In addition, the plurality of tolerance adjusters 4 include at least three tolerance adjusters 4 distributed in a triangular shape. There may be three or more tolerance adjusters 4.

According to the technical solution provided in embodiments of the present disclosure, the tolerance adjusters 4 distributed in the triangular shape are disposed, and according to a principle of determining one plane based on three points, the detection assembly 3 can be more stable.

An embodiment of the present disclosure further provides a vehicle. The vehicle has the foregoing detection assembly mounting structure.

The vehicle may be a car, a sport utility vehicle (sport utility vehicle, SUV), a multi-purpose vehicle (multi-purpose vehicle, MPV), or the like. The vehicle may implement an autonomous driving function or another detection function by using the detection assembly in the detection assembly mounting structure.

Terms used in implementations of the present disclosure are merely used to explain embodiments of the present disclosure, but are not intended to limit the present disclosure. Unless otherwise defined, technical terms or scientific terms used in the implementations of the present disclosure shall have common meanings understood by a person of ordinary skill in the art to which the present disclosure pertains. The terms "first", "second", and the like used in the specification and claims of the present disclosure do not indicate any order, quantity, or significance, but are merely intended to distinguish between different components. Likewise, "a/an", "one", or the like is not intended to indicate a quantity limitation either, but is intended to indicate existing at least one. Terms such as "include" and "comprise" mean that an element or object before the "include" or "comprise" encompasses elements or objects and their equivalents listed after the "include" or "comprise", and other elements or objects are not excluded. Terms such as "up", "down", "left", and "right" merely indicate a relative location relationship. After an absolute location of a described object changes, the relative location relationship may also change correspondingly. "A plurality of" means two or more, unless otherwise specified.

The foregoing descriptions are merely optional embodiments of the present disclosure, but are not intended to limit the present disclosure. Any modification, equivalent replacement, improvement, or the like made within the principle of the present disclosure shall fall within the protection scope of the present disclosure.

## Claims

1. A detection assembly mounting structure, wherein the detection assembly mounting structure comprises a vehicle roof bow (1), a trim panel (2), a detection assembly (3), and a tolerance adjuster (4);
the trim panel (2) is connected to the vehicle roof bow (1); and
the detection assembly (3) is connected to the trim panel (2), and the detection assembly (3) is connected to the vehicle roof bow (1) via the tolerance adjuster (4).

2. The detection assembly mounting structure according to claim 1, wherein the tolerance adjuster (4) comprises an outer tube (41) and an inner tube (42), the outer tube (41) is in threaded connection to the inner tube (42), and the outer tube (41) and the inner tube (42) are located between the detection assembly (3) and the vehicle roof bow (1); and
the detection assembly mounting structure further comprises a bolt (5), wherein the bolt (5) passes through the vehicle roof bow (1), the inner tube (42), and the outer tube (41), and is connected to the detection assembly (3).

3. The detection assembly mounting structure according to claim 2, wherein a rotation direction of a thread between the inner tube (42) and the outer tube (41) is opposite to a rotation direction of a thread of the bolt (5); and
the bolt (5) is in interference fit with the inner tube (42).

4. The detection assembly mounting structure according to claim 2 or 3, wherein the outer tube (41) has a hook (411), and the hook (411) is clamped to the vehicle roof bow (1) or the detection assembly (3).

5. The detection assembly mounting structure according to any one of claims 1 to 3, wherein the detection assembly (3) comprises a detector (31); and
the detector (31) is connected to the trim panel (2), and the detector (31) is connected to the vehicle roof bow (1) via the tolerance adjuster (4).

6. The detection assembly mounting structure according to claim 5, wherein the tolerance adjuster (4) comprises the outer tube (41) and the inner tube (42), the outer tube (41) is in threaded connection to the inner tube (42), the outer tube (41) and the inner tube (42) are located between the detector (31) and the vehicle roof bow (1), the outer tube (41) has a hook (411), and the hook (411) is clamped to the vehicle roof bow (1); and
the detection assembly mounting structure further comprises the bolt (5), wherein the bolt (5) passes through the vehicle roof bow (1), the outer tube (41), and the inner tube (42), and is in threaded connection to the detector (31).

7. The detection assembly mounting structure according to claim 1, wherein the detection assembly (3) comprises a detector (31) and a bracket (32), and the detector (31) is fastened to the bracket (32); and
the detector (31) is connected to the trim panel (2), and the bracket (32) is connected to the vehicle roof bow (1) via the tolerance adjuster (4).

8. The detection assembly mounting structure according to claim 1, wherein the detection assembly (3) comprises a detector (31) and a bracket (32), and the detector (31) is fastened to the bracket (32); and
the bracket (32) is connected to the trim panel (2), and the bracket (32) is connected to the vehicle roof bow (1) via the tolerance adjuster (4).

9. The detection assembly mounting structure according to claim 7 or 8, wherein the tolerance adjuster (4) comprises an outer tube (41) and an inner tube (42), the outer tube (41) is in threaded connection to the inner tube (42), the outer tube (41) and the inner tube (42) are located between the bracket (32) and the vehicle roof bow (1), the outer tube (41) has a hook (411), and the hook (411) is clamped to the bracket (32); and
the detection assembly mounting structure further comprises a bolt (5), wherein the bolt (5) passes through the vehicle roof bow (1), the inner tube (42), and the outer tube (41), and is in threaded connection to the bracket (32).

10. The detection assembly mounting structure according to claim 9, wherein there is a gap (30) between the bracket (32) and a bottom wall (311) of the detector (31), and the hook (411) passes through the bracket (32) and extends into the gap (30).

11. The detection assembly mounting structure according to claim 10, wherein a plurality of bosses (3111) are provided on the bottom wall (311) of the detector (31), and the plurality of bosses (3111) are fastened to the bracket (32), to form the gap (30) between the bracket (32) and the bottom wall (311) of the detector (31).

12. The detection assembly mounting structure according to claim 10, wherein a plurality of mounting feet (3121) are provided on a side wall (312) of the detector (31), and the bracket (32) comprises a first support plate (321), a connection plate (322), and a second support plate (323) that are sequentially connected;
the first support plate (321) is fastened to the plurality of mounting feet (3121);
the connection plate (322) is opposite to the side wall (312) of the detector (31); and
the second support plate (323) is opposite to the bottom wall (311) of the detector (31), and the gap (30) is formed between the second support plate (323) and the bottom wall (311) of the detector (31).

13. The detection assembly mounting structure according to any one of claims 1 to 3, wherein there are a plurality of tolerance adjusters (4), and the plurality of tolerance adjusters (4) comprise at least three tolerance adjusters (4) distributed in a triangular shape.

14. A vehicle, wherein the vehicle has the detection assembly mounting structure according to any one of claims 1 to 13.
